Europäisches Patentamt

European Patent Office

Office européen des brevets

(19)

(11) EP 0 456 804 B1

(12) **FASCICULE DE BREVET EUROPEEN**

(45) Date de publication et mention
de la délivrance du brevet:
**11.03.1998 Bulletin 1998/11**

(21) Numéro de dépôt: **91900843.3**

(22) Date de dépôt: **06.12.1990**

(51) Int Cl.$^6$: **G06T 9/00**

(86) Numéro de dépôt international:
**PCT/FR90/00888**

(87) Numéro de publication internationale:
**WO 91/08546 (13.06.1991 Gazette 1991/13)**

(54) **PROCEDE DE COMPRESSION D'IMAGES PAR AUTO-ORGANISATION D'UN RESEAU NEURONAL**

BILDKOMPRESSIONSVERFAHREN DURCH AUTOORGANISATION VON EINEM NEURONALEN NETZ

METHOD FOR COMPRESSING IMAGES BY SELF-ORGANIZATION OF A NEURONAL NETWORK

(84) Etats contractants désignés:
**AT BE CH DE DK ES GB GR IT LI LU NL SE**

(30) Priorité: **06.12.1989 FR 8916111**

(43) Date de publication de la demande:
**21.11.1991 Bulletin 1991/47**

(73) Titulaire: **THOMSON multimedia
92400 Courbevoie (FR)**

(72) Inventeurs:
- **BUREL, Gilles
  F-35200 Rennes (FR)**
- **POITIER, Isabelle
  F-35700 Rennes (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 372 608**

- **Applied Optics, vol. 26, no. 23, 1 decembre 1987, Optical Society of America, L.D. Jackel et al.: "Building a hierarchy with neural networks: an example - image vector quantization", pages 5081-5084**
- **Pattern Recognition Letters, vol. 10, no. 1, juillet 1989, British Crown, (Amsterdam, NL), S.P. Luttrell: "Image compression using a multilayer neural network", pages 1-7**
- **IGARSS'88, International Geoscience and Remote Sensing Symposium, Edingburgh, 12-16 septembre 1988, vol. III, IEEE, (New York, US), S.P. Luttrell: "Image compression using a neural network", pages 1231-1238**

**Description**

La présente invention se rapporte à un procédé de compression par blocs d'image numériques, par auto-organisation, d'un réseau neuronal.

La technique de compression d'images consiste à réduire la quantité de données nécessaires pour représenter une image. Cette technique est très utilisée dans les domaines des transmissions ou du stockage d'images.

Lorsqu'une image comprimée est décodée pour reconstruire sa forme originale, une distorsion affecte l'image reconstruite. Par conséquent, l'efficacité d'un algorithme de compression se mesure à la fois par son taux de compression, la distorsion résultante, sa complexité d'implémentation. La complexité d'implémentation est un point particulièrement important pour la réalisation matérielle des codeurs et des décodeurs.

Les principales méthodes de compression par blocs d'images numériques connues utilisent des algorithmes tels que la transformation de Karhunen-Loève, la transformation de Hadamard, la transformation cosinus, la quantification vectorielle. Ces algorithmes sont implémentés sur des machines séquentielles pour lesquelles le traitement des données est lent et des manipulations manuelles sont nécessaires lorsqu'il faut s'adapter à un type d'image différent.

En intelligence artificielle, les réseaux neuronaux-connexionistes ou neuro-mimétiques connaissent actuellement un regain d'intérêt, et l'architecture des réseaux neuronaux possède intrinsèquement un potentiel de traitement parallèle massif.

Le traitement des données en parallèle permet un gain de temps considérable par rapport aux machines séquentielles, mais les algorithmes utilisés jusqu'à présent pour la compression d'images sont adaptés aux machines séquentielles et leur parallélisation est peu aisée.

Le document EP-A-0 372 608 publié le 13.06.90 décrit un procédé de compression de données à partir d'un réseau de neurones, dont la compression de données est effectuée par quantification vectorielle selon un pré-codage par blocs formés de plusieurs éléments d'image, puis comparaison par un réseau de neurones des blocs pré-codés avec des mots de référence stockés sous forme d'un dictionnaire dans le réseau de neurones. Puis, des index sélectionnés correspondant aux index des mots de référence les plus proches des blocs précodés sont retransmis à un récepteur. Dans la phase d'apprentissage, des prototypes prescrivant des états de neurones stables sont introduits dans le réseau de neurones pour déterminer ses coefficients synaptiques associés à chaque prototype.

Un autre dispositif de compression de données de ce genre est connu du document "Building a hierarchy with neural networks: an example - image vector quantization" par L.D. JACKEL, R.E. HOWARD, J.S. DENKER, W. HUBBARD and S.A. SOLLA, Applied Optics vol 26, n°23, pages 5081-5084. Selon ce document, l'opération de compression est effectuée à l'aide d'un réseau de neurones afin de pouvoir opérer à la cadence nécessaire au codage d'une image vidéo. Ce document met en oeuvre un dictionnaire fixe qui est pré-établi. Il ne peut donc pas s'adapter à des configurations d'images multiples.

L'invention concerne une nouvelle méthode de compression d'images entièrement automatique quel que soit le type d'image à comprimer, simple à mettre en oeuvre, qui utilise un algorithme directement compatible avec les futures machines connexionistes massivement parallèles qui seront développées dans les prochaines années. Cette méthode est basée sur la notion d'apprentissage, ce qui lui permet de s'adapter au mieux à un type d'image particulier, tel que les images télévision, les images aériennes, etc ..., et donc de fournir une faible distorsion pour ce type d'image. De plus, le système peut être rapidement reconfiguré pour s'adapter à un autre type d'image simplement en relançant un apprentissage sur des images de ce type.

Selon l'invention, le procédé de compression d'images par auto-organisation d'un réseau neuronal comprend :

- un prétraitement pendant lequel des images de même type sont découpées en blocs de pixels de dimensions inférieures à celles des images,

- une phase d'initialisation d'un réseau neuronal comportant N neurones disposés dans un même plan et ayant un nombre d'entrées égal à la dimension des blocs extraits des images, pendant laquelle des valeurs de coefficients, ou poids, sont affectées aléatoirement à chaque connexion liant un neurone j à une entrée ei, et un rayon de voisinage initial Vo déterminant les neurones voisins du neurone j est choisi

- une phase d'apprentissage pendant laquelle le réseau de neurones est alimenté successivement par des blocs de pixels extraits aléatoirement des différentes images et les poids des connexions neuronales évoluent par approches successives suivant un algorithme simulant le comportement du cortex visuel par un calcul de potentiels visant à élire un neurone avec mise à jour de ses voisins, jusqu'à ce que leurs valeurs soient aussi proche que possible de valeurs d'entrées les plus probables,

- une phase de compression pendant laquelle l'image source est découpée en blocs de pixels, chaque bloc étant présenté l'un après l'autre aux entrées du réseau de neurones et codé en fonction du neurone dont les valeurs des poids sont les plus proches des entrées.

D'autres particularités et avantages de l'invention apparaîtront clairement dans la description suivante donnée à titre d'exemple non limitatif, et faite en regard des figures annexées qui représentent :

- la figure 1, la structure générale des réseaux neuronaux de Kohonen ;
- la figure 2, un exemple de réseau neuronal selon l'invention ;
- la figure 3, un organigramme de la phase d'apprentissage, selon l'invention ;
- la figure 4, un exemple de variation de l'étendue du voisinage en cours d'apprentissage, selon l'invention ;
- la figure 5, un organigramme de la phase de compression d'une image source, selon l'invention ;
- la figure 6, un organigramme du décodage d'une image comprimée, selon l'invention.

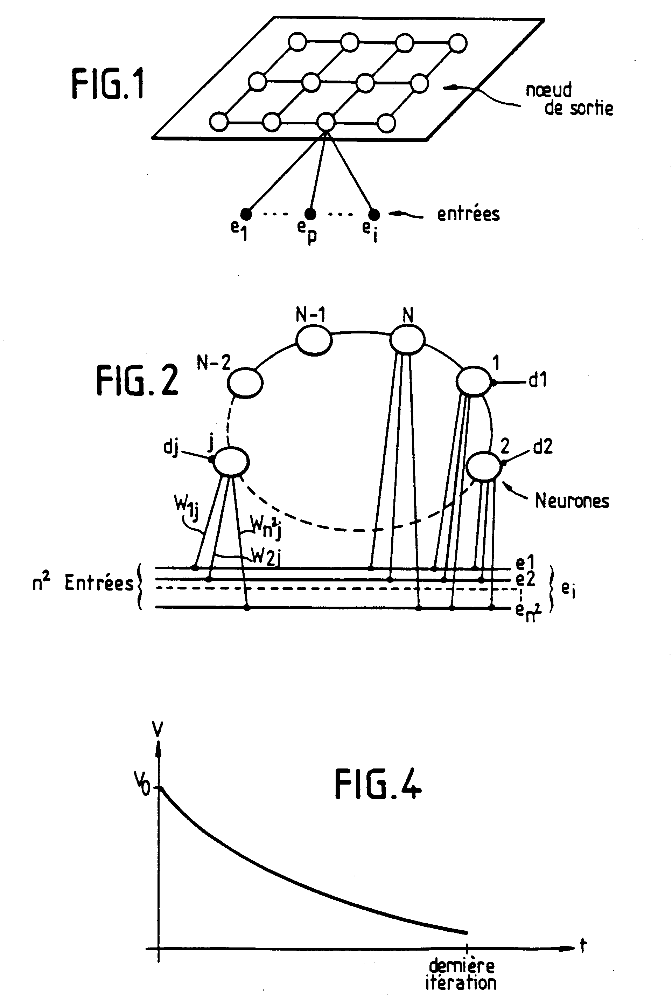

La figure 1 montre la structure générale des réseaux neuronaux dits de Kohonen. Ce type de réseau ne comprend qu'une seule couche de N neurones disposés dans un même plan. Chaque neurone est connecté à toutes les entrées $e_1 ... e_i$ qui sont destinées à recevoir des données telles que par exemple des pixels extraits d'une image.

Entre les neurones de cette couche, il y a des connexions internes, de type excitatrices si les neurones sont proches voisins ou inhibitrices s'ils sont éloignés. La notion de voisinage dépend de la distance entre les neurones.

Ces réseaux de neurones à connexions latérales simulent partiellement la structure des aires V17 et V18 du cortex visuel. Ils s'auto-organisent naturellement en fonction des entrées reçues pour réagir à un groupe de données qui ont des caractéristiques semblables ; un neurone et ses voisins représentent une catégorie d'entrées. Après une phase d'apprentissage qui consiste en une recherche de similarités, ces réseaux réalisent une compression des données dont la nature s'apparente formellement à la quantification vectorielle, c'est-à-dire qu'à un groupe de données correspond un vecteur caractéristique.

Dans une image en niveaux de gris découpée en blocs de par exemple n x n pixels, certaines configurations sont beaucoup plus probables que d'autres. Dans une phase d'apprentissage, l'utilisation d'un réseau de neurones à connexions latérales permet de découvrir ces configurations les plus probables.

A cet effet, le réseau neuronal représenté sur la figure 2 comporte N neurones numérotés de 1 à N dont les entrées sont des blocs n x n (par exemple n = 4 ou 8) extraits d'une image de dimension très grande devant n. Le nombre d'entrées nécessaires pour chaque neurone est égal à la dimension du bloc de pixels extrait de l'image. Dans le cas de blocs n x x pixels, chaque neurone comporte au moins $n^2$ entrées et une sortie. Le réseau est bouclé préférentiellement en anneau pour éviter les effets de bord, c'est-à-dire que les neurones sont disposés sur une boucle fermée de façon que tous les neurones soient entourés du même nombre de neurones voisins. Les neurones j reçoivent tous les mêmes entrées qui sont à un instant donné, les $n^2$ pixels du bloc

n x n extraits de l'image et délivrent en sortie leur réponse $d_j$ à ces entrées.

Dans une phase d'apprentissage, le réseau de neurones est alimenté par des blocs extraits aléatoirement, d'une ou plusieurs images de même type (par exemple des images aériennes). A chaque connexion neuronale liant une entrée $e_i$ à un neurone de numéro j, est affecté un coefficient, dit poids de la connexion wij, qui est ajusté par approches successives jusqu'à ce que les configurations les plus fréquentes soient repérées par les poids des connexions neuronales. Outre les connexions entre un neurone j et toutes les entrées $e_i$, la définition d'un rayon de voisinage du neurone j permet à d'autres neurones du réseau appartenant à ce voisinage d'apprendre en même temps. Ce rayon de voisinage est choisi élevé au début des itérations afin que beaucoup de neurones apprennent en même temps et diminue en cours d'apprentissage jusqu'à un minimum correspondant à un seul voisin en fin d'apprentissage, de façon à faciliter la différenciation des neurones lorsque le nombre d'itérations augmente.

Par exemple, pour un réseau de N = 512 neurones, un voisinage initial Vo = 128 et un voisinage final VT = 0,5 sont des valeurs bien adaptées.

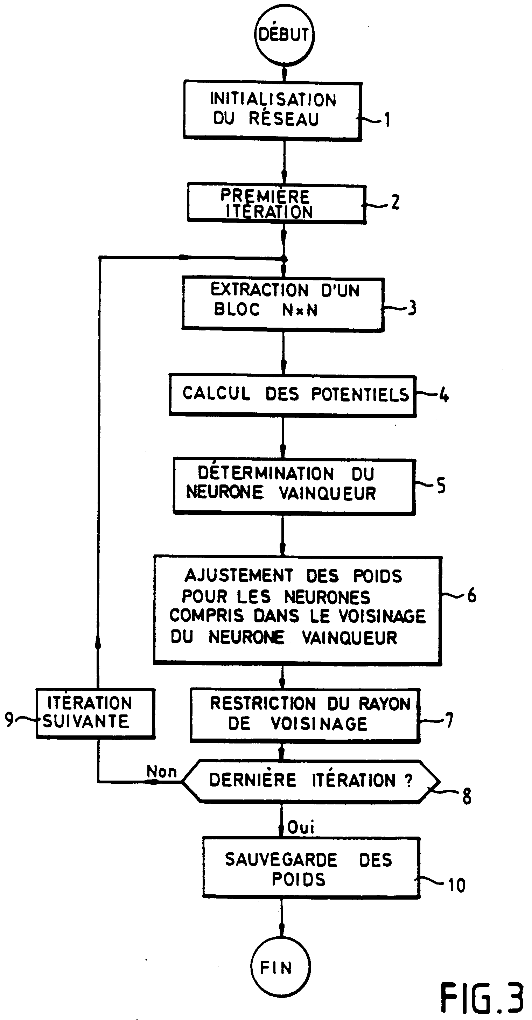

Pour cette phase d'apprentissage, l'algorithme d'auto-organisation utilisé est l'algorithme de Kohonen dont l'organigramme est représenté sur la figure 3. Cet algorithme est choisi pour sa totale compatibilité avec les futures machines connexionistes pour lesquelles le traitement des données s'effectue en parallèle et comporte les étapes suivantes :

Dans une première étape est effectuée l'initialisation du réseau, 1 ; les poids $W_{ij}$ des connexions neuronales entre un neurone j et les entrées $e_i$ sont initialisés pour chacun des neurones et l'étendue d'un rayon de voisinage initial Vo est choisi. Les valeurs initiales des poids des connexions neuronales sont fixées aléatoirement selon une loi de probabilité uniforme sur les niveaux de gris possibles, ces niveaux étant situés généralement entre 0 et 255, c'est-à-dire que les valeurs des poids $W_{ij}$ sont comprises entre 0 et 255. La valeur initiale de l'étendue du voisinage $V_o$ est définie par l'utilisateur.

Dans une deuxième étape, à la première itération, 2, il est procédé à l'extraction d'un bloc n x n, 3, sur une image et au calcul des potentiels, 4, de chacun des neurones, ce calcul étant effectué en parallèle. Un bloc n x n pixels est extrait aléatoirement de l'image, les $n^2$ pixels du bloc sont présentés aux entrées du réseau de neurones, et les potentiels $d_j$ de tous les neurones j du réseau sont calculés par la formule suivante :

$$d_j = \sum_{i=1}^{n^2} (W_{ij} - e_i)^2$$

pour tous les neurones j

où $W_{ij}$ est le poids de la connexion liant l'entrée i au neurone j ; $e_i$ est le niveau de gris du $i^e$ pixel du bloc extrait sur l'image. Il est à remarquer que $d_j$ est une fonction positive qui mesure l'écart entre l'état du neurone j et l'état des entrées $e_i$ ; $d_j$ est une distance entre le vecteur des poids $\overrightarrow{w_{ij}}$ et le vecteur des entrées $\overrightarrow{e_i}$.

Dans une troisième étape, il y a détermination du neurone "vainqueur", 5, et ajustement des poids pour les neurones compris dans le voisinage du neurone vainqueur, 6. Le neurone $j_o$ qui se rapproche le plus des entrées est recherché. Il est tel que son potentiel $d_j$ est minimal. Les poids des connexions liant d'une part, les entrées $e_i$ au neurone $j_o$, dit "neurone vainqueur", et liant, d'autre part, les entrées $e_i$ aux neurones voisins du neurone vainqueur sont modifiés selon la formule suivante, où t est le rang de l'itération, $\eta$ est la constante d'apprentissage, V est l'étendue du voisinage pour le rang d'itération t.

$$w_{ij}(t+1)=w_{ij}(t)+ \eta\ (e_i(t)-w_{ij}(t))$$

pour tous les neurones j tels que $I(j-j_o)mod\ NI \leq V$, de façon que le neurone $j_o$ et tous les neurones appartenant au voisinage du neurone $j_o$ aient leurs poids qui se rapprochent des valeurs des entrées.

Pour les neurones j situés à l'extérieur du voisinage V, les poids des connexions liant les entrées $e_i$ aux neurones j sont inchangés : $W_{ij}(t+1) = W_{ij}(t)$ pour les neurones j tels que $I(j-jo)mod\ NI > V$.

La vitesse d'apprentissage dépend de la valeur de la constante d'apprentissage $\eta$ La valeur de $\eta$ doit être comprise entre 0 et 1. Par exemple, $\eta$ est choisi égal à 0,1 de façon à ce que les variations des poids à chaque itération ne soit pas trop importantes et à ce que le temps d'apprentissage ne soit pas trop long.

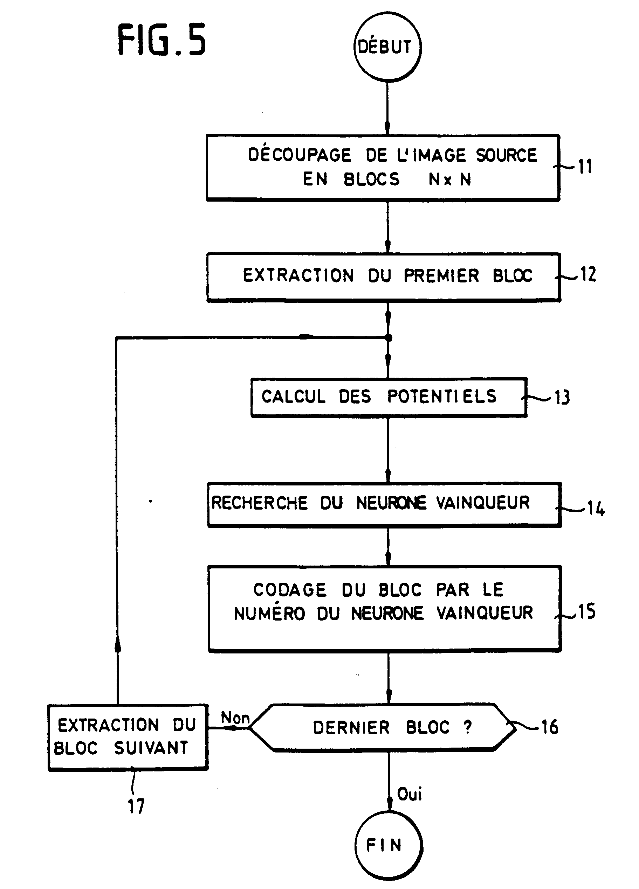

Il y a ensuite restriction du rayon de voisinage, 7, et un test 8 est effectué pour savoir si toutes les itérations ont été effectuées ; si le test 8 est négatif il y a passage à l'itération suivante, 9, en reprenant toutes les étapes 3 à 7, de l'organigramme avec un nouveau bloc n x n pixels extrait aléatoirement d'une image. L'étendue du voisinage V est réduite en cours d'apprentissage de façon à faciliter la différenciation des neurones lorsqu'ils se sont rapprochés des configurations des entrées les plus probables. La figure 4 montre un exemple de variation de l'étendue du voisinage en cours d'apprentissage. Sur l'exemple de la figure 4, il a été choisi une loi exponentielle décroissante qui s'écrit $V= V_o \exp (-t/K)$ mais tout autre loi décroissante pourrait convenir.
où $V_o$ est le voisinage initial, t est le rang de l'itération et K est une constante positive.

La valeur de K est choisie de façon à ce qu'à la fin de l'apprentissage, c'est-à-dire à la dernière itération, la valeur du voisinage V soit minimale.

Il faut un grand nombre d'itérations pour que le réseau s'auto-organise : par exemple pour un réseau de 512 neurones et une image de 512 x 512 pixels, 32000 blocs 8 x 8 pixels, soit 32000 itérations, permettent une bonne convergence de l'algorithme de Kohonen, avec les paramètres suivants :

$\eta = 0,1$ pour le taux d'apprentissage
$Vo = 128$ pour le voisinage initial
$VT = 0,5$ pour le voisinage final.

Lorsque le processus d'auto-organisation est stabilisé, c'est-à-dire que le test 8, figure 3, indique que la dernière itération a été atteinte, les poids des connexions neuronales sont gelés, par la sauvegarde 10 de ces poids et le réseau de neurones peut être utilisé à des fins de compression.

La figure 5 représente l'organigramme correspondant à la compression d'une image source. Pour la phase de compression, l'image à comprimer est découpée en blocs n x n, étape 11, et il y a extraction, 12, du premier bloc, de l'image. Pour chaque bloc, les $n^2$ pixels du bloc sont présentés aux entrées du réseau de neurones. Les potentiels des neurones sont calculés, étape 13, et le neurone $j_o$ dont le potentiel $d_{jo}$ est minimal est recherché, étape 14. Le bloc n x n correspondant à ce neurone dit "neurone vainqueur" est alors codé par le numéro de ce neurone, par une étape de codage 15, chaque neurone étant numéroté de 1 à N, N = 512 par exemple. Un test 16 est effectué pour savoir si ce bloc est le dernier bloc de l'image, si non il y a extraction,17, du bloc suivant sur l'image. Les $n^2$ pixels du bloc suivant sont alors, à leur tour, présentés aux entrées du réseau de neurones et un nouveau neurone est déclaré "vainqueur", ce bloc est alors codé par le numéro de ce neurone ; et ainsi de suite jusqu'à ce que tous les blocs de l'image source soient codés. Lorsque tous les blocs n x n constituant l'image sont codés, l'image est transmise.

Si $b_p$ est le nombre de bits par pixel dans l'image et N est le nombre de neurones, le taux de compression $T_c$ obtenu est le suivant :
Tc= bp (image source)/bp (image codée)

$$Tc= bp\ x\ n^2/log_2 N$$

Ce taux de compression peut être amélioré en utilisant un codage à longueur variable, tel que par exemple un codage de Huffman, pour les numéros des neurones. Un codage à longueur variable permet de coder sur une longueur plus courte les numéros des neurones revenant plus fréquemment.

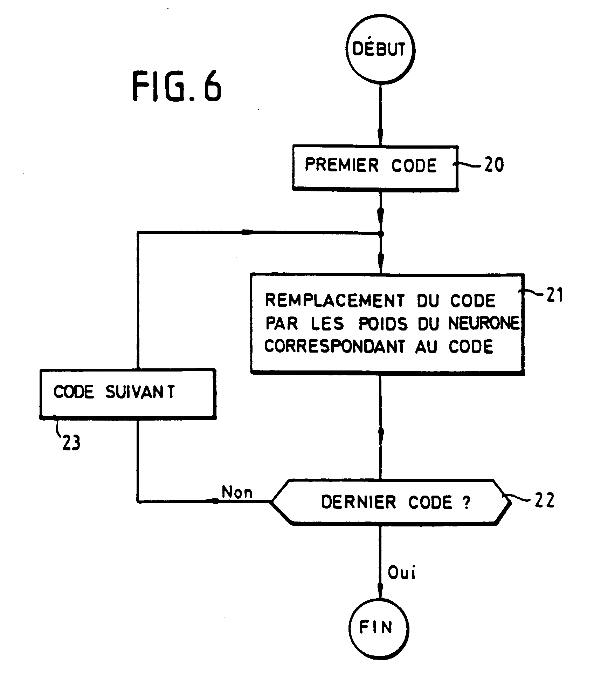

La figure 6 représente l'organigramme correspondant au décodage de l'image comprimée. A la réception de l'image, pour décoder l'image comprimée, il suffit de faire les opérations inverses du codage, c'est-à-dire de remplacer les numéros de l'image codée par les poids des connexions des neurones correspondant à ces numéros. Chaque code est regardé séparément, en commençant par le premier,20, il est procédé au remplacement de ce code par les poids du neurone correspondant, 21, un test,22, détermine s'il s'agit du dernier code, si non le code suivant,23, est présenté et ainsi de suite jusqu'au dernier code. L'image est reconstruite lorsque tous les codes ont été décryptés.

La présente invention n'est pas limitée aux exemples de réalisation précisément décrits ; notamment il n'est pas indispensable que le réseau de neurones soit bouclé en anneau, un réseau de neurones disposés en ligne peut être utilisé à condition de tenir compte des effets de bord. De même, il n'est pas indispensable que la décroissance de l'étendue du voisinage en cours d'apprentissage suive une loi exponentielle ; toute loi permettant de faire décroître l'étendue du voisinage en cours d'apprentissage, par exemple une loi linéaire qui aurait comme voisinage initial $V_o$ et un voisinage final minimal, peut convenir également.

Il n'est pas indispensable, non plus, que la dimension des blocs extraits de l'image soit n x n, les blocs peuvent avoir une dimension n x k, n étant différent de k.

L'image source, dans l'exemple décrit est en niveau de gris, pour une image couleur, le procédé convient aussi bien mais avec trois fois plus de valeurs de pixels puisqu'il faut rajouter les valeurs chrominances.

Pour coder l'image, dans l'exemple décrit, les N neurones ont été numérotés de 1 à N ; tout autre codage permettant de repérer les neurones vainqueurs convient.

## Revendications

1.  Procédé de compression d'images par auto-organisation d'un réseau neuronal, comprenant :

    -   un prétraitement pendant lequel des images de même type sont découpées en blocs de pixels de dimensions inférieures à celles des images,
    -   une phase d'initialisation d'un réseau neuronal comportant N neurones disposés dans un même plan et ayant un nombre d'entrées égal à la dimension des blocs extraits des images, pendant laquelle des valeurs de coefficients, ou poids, sont affectées aléatoirement à chaque connexion liant un neurone j à une entrée ei, et un rayon de voisinage initial Vo déterminant les neurones voisins du neurone j est choisi
    -   une phase d'apprentissage pendant laquelle le réseau de neurones est alimenté successivement par des blocs de pixels extraits aléatoirement des différentes images et les poids des connexions neuronales évoluent par approches successives suivant un algorithme simulant le comportement du cortex visuel par un calcul de potentiels visant à élire un neurone avec mise à jour de ses voisins, jusqu'à ce que leurs valeurs soient aussi proches que possible de valeurs d'entrées les plus probables,
    -   une phase de compression pendant laquelle l'image source est découpée en blocs de pixels, chaque bloc étant présenté l'un après l'autre aux entrées du réseau de neurones et codé en fonction du neurone dont les valeurs des poids sont les plus proches des entrées.

2.  Procédé selon la revendication 1, caractérisé en ce que à chaque bloc présenté aux entrées du réseau de neurones, les poids du neurone dont l'état est le plus proche de l'état des entrées et les poids de tous les neurones voisins sont modifiés de façon à ce que leurs valeurs se rapprochent des valeurs des entrées, les poids des autres neurones étant inchangés.

3.  Procédé selon la revendication 2, caractérisé en ce que le rayon de voisinage entre un neurone j et les autres neurones du réseau diminue au cours de la phase d'apprentissage.

4.  Procédé selon la revendication 3, caractérisé en ce que l'algorithme est l'algorithme de Kohonen.

5.  Procédé selon l'une quelconque des revendications précédentes, caractérisé en ce que le réseau de neurones est bouclé en anneau, de façon à ce que tous les neurones aient le même nombre de neurones voisins.

## Patentansprüche

1.  Bildkompressionsverfahren durch Autoorganisation von einem neuronalen Netz, enthaltend:

    -   eine Vorverarbeitung, während der Bilder vom selben Typ in Blöcke mit Pixeln aufgeteilt werden, deren Abmessungen kleiner sind als die der Bilder,
    -   eine Initialisierungsphase eines neuronalen Netzes mit N Neuronen. die in derselben Ebene angeordnet sind und eine Anzahl von Eingängen aufweisen, die gleich ist dem Wert der aus den Bildern extrahierten Blöcke, wobei während dieser Phase die Werte der Koeffizienten, oder Gewichte, zufallsgesteuert jeder Verbindung zugewiesen werden, die ein Neuron j mit einem Eingang ei verbindet, und wobei ein anfänglicher Umgebungsbereich $V_o$ ausgewählt wird, der die Nachbarneuronen des Neurons j bestimmt,
    -   eine Lernphase, während der das Neuronennetz nacheinander mit Pixelblökken versorgt wird, die zufallsgesteuert aus den verschiedenen Bildern extrahiert werden, wobei die Gewichte der neuronalen Verbindungen aus sukzessiven Annäherungen entsprechend einem Algorithmus entwickelt werden, der das Verhalten des visuellen Kortex durch eine Berechnung der Potentiale, die ein Neuron mit Aktualisierung seiner Nachbarn entwickelt, simuliert, bis ihre Werte so nahe wie möglich sind zu den Werten der wahrscheinlichsten Eingänge,

- eine Kompressionsphase, während der das Ursprungsbild in Pixelblöcke aufgeteilt wird, wobei jeder Block einer nach dem anderen den Eingängen der neuronalen Netze angeboten und als Funktion des Neurons kodiert wird, dessen Gewichtswerte denen der Eingänge am nächsten kommen.

2. Verfahren nach Anspruch 1, dadurch gekennzeichnet, daß bei jedem den Eingängen des Neuronennetzes angebotenen Block die Gewichte des Neurons, dessen Zustand dem Zustand der Eingänge am nächsten kommt, und die Gewichte aller benachbarten Neuronen derart abgewandelt werden, daß ihre Werte sich an die Werte der Eingänge annähern, während die Gewichte der anderen Neuronen unverändert bleiben.

3. Verfahren nach Anspruch 2, dadurch gekennzeichnet, daß der Nachbarbereich zwischen einem Neuron j und den übrigen Neuronen des Netzes im Verlauf der Lernphase abnimmt.

4. Verfahren nach Anspruch 3, dadurch gekennzeichnet, daß der Algorithmus der Algorithmus von Kohonen ist.

5. Verfahren nach einem der vorangehenden Ansprüche, dadurch gekennzeichnet, daß das Neuronennetz derart in einen Ring eingefaßt ist, daß alle Neuronen dieselbe Anzahl von Nachbarneuronen aufweisen.

## Claims

1. Method of picture compression by auto-organization of a neural network, comprising:

- a preprocessing during which pictures of identical type are partitioned into pixel blocks with dimensions smaller than those of the pictures,
- a phase of initializing a neural network comprising N neurons disposed in a single plane and having a number of inputs equal to the dimension of the blocks extracted from the pictures, during which values of coefficients, or weights, are randomly allocated to each connection linking a neuron j to an input ei, and an initial neighbourhood radius Vo determining the neighbour neurons of the neuron j is chosen
- a learning phase during which the neural network is fed successively with pixel blocks extracted randomly from the various pictures and the weights of the neural connections evolve by successive approximations following an algorithm simulating the behaviour of the visual cortex, through a computation of potentials which aims to elect one neuron with updating of its neighbours, until their values are as close as possible to most probable input values,

- a compression phase during which the source picture is partitioned into pixel blocks, each block being presented one after the other to the inputs of the neural network and coded as a function of the neuron of which the values of the weights are closest to the inputs.

2. Method according to Claim 1, characterised in that with each block presented to the inputs of the neural network, the weights of the neuron whose state is closest to the state of the inputs and the weights of all the neighbour neurons are modified so that their values approximate the values of the inputs, the weights of the other neurons being unchanged.

3. Method according to Claim 2, characterised in that the neighbourhood radius between a neuron j and the other neurons of the network diminishes during the learning phase.

4. Method according to Claim 3, characterised in that the algorithm is the Kohonen algorithm.

5. Method according to any one of the preceding claims, characterised in that the neural network is looped in a ring, so that all the neurons have the same number of neighbour neurons.

## FIG.1

nœud
de sortie

entrées

$e_1$ .... $e_p$ .... $e_i$

## FIG.2

N-1

N

N-2

1 — d1

dj  j

2  d2

Neurones

$W_{1j}$

$W_{n^2j}$

$W_{2j}$

$n^2$ Entrées {

e1
e2
e$_i$
e$_{n^2}$

## FIG.4

V

V$_0$

t

dernière
itération

FIG.3

# FIG.5

DÉBUT

DÉCOUPAGE DE L'IMAGE SOURCE EN BLOCS N x N —11

EXTRACTION DU PREMIER BLOC —12

CALCUL DES POTENTIELS —13

RECHERCHE DU NEURONE VAINQUEUR —14

CODAGE DU BLOC PAR LE NUMÉRO DU NEURONE VAINQUEUR —15

EXTRACTION DU BLOC SUIVANT

17

Non DERNIER BLOC ? —16

Oui

FIN

## FIG. 6

DÉBUT

PREMIER CODE — 20

REMPLACEMENT DU CODE PAR LES POIDS DU NEURONE CORRESPONDANT AU CODE — 21

CODE SUIVANT

23

Non — DERNIER CODE ? — 22

Oui

FIN